# EUROPÄISCHE PATENTSCHRIFT

(11) **EP 3 165 349 B1**
(45) Veröffentlichungstag und Bekanntmachung des Hinweises auf die Patenterteilung: **17.07.2019**
(21) Anmeldenummer: 16002254.7
(22) Anmeldetag: 20.10.2016
(51) Int. Cl.: B29C 67/00, B33Y 30/00

(54) **VORRICHTUNG ZUM HERSTELLEN DREIDIMENSIONALER OBJEKTE**
DEVICE FOR MANUFACTURING THREE-DIMENSIONAL OBJECTS
DISPOSITIF DE FABRICATION D'OBJETS TRIDIMENSIONNELS

(30) Priorität: 23.10.2015 DE 102015118162
(43) Veröffentlichungstag der Anmeldung: 10.05.2017
(73) Patentinhaber: FIT AG, 92331 Lupburg (DE)
(72) Erfinder: Fruth, Carl, 92331 Parsberg (DE)
(74) Vertreter: Schneider, Andreas

(56) Entgegenhaltungen:
- EP-A1- 2 839 948
- EP-A2- 0 776 713

## Beschreibung

Die Erfindung betrifft eine Vorrichtung sowie ein Verfahren zum Herstellen dreidimensionaler Objekte durch selektives Verfestigen eines schichtweise aufgebrachten Aufbaumaterials.

Aus dem Stand der Technik sind Vorrichtungen und Verfahren zur Herstellung dreidimensionaler Objekte durch selektives Verfestigen eines schichtweise aufgetragenen Aufbaumaterials in großer Zahl bekannt. Zu nennen sind hier beispielsweise das Lasersintern oder das Selektive Maskensintern. Anlagen, mit denen ein solches Schichtbauverfahren durchgeführt wird, werden auch als Rapid Prototyping-Systeme bezeichnet. Diese Schichtbauverfahren dienen zur Herstellung von schichtweise aufgebauten Bauteilen aus verfestigbarem Material, wie Harz, Kunststoff, Metall oder Keramik, und werden beispielsweise zur Fertigung von technischen Prototypen verwendet. Dabei können mit Hilfe einer additiven Fertigungsmethode dreidimensionale Objekte direkt aus CAD-Daten hergestellt werden.

Bei einem solchen Schichtbauverfahren erfolgt der Aufbau der Objekte schichtweise, d. h. es werden Schichten eines Aufbaumaterials sukzessive übereinander aufgetragen. Vor dem Aufbringen der jeweils nächsten Schichten werden die dem zu fertigenden Objekt entsprechenden Stellen in den jeweiligen Schichten selektiv verfestigt. Das Verfestigen erfolgt beispielsweise durch lokales Erhitzen eines zumeist pulverförmigen Schichtrohmaterials mit Hilfe einer Strahlungsquelle. Indem gezielt Strahlung in geeigneter Weise in die gewünschten Bereiche eingebracht wird, kann eine exakt definierte, beliebig geartete Objektstruktur erzeugt werden.

Dabei ist auch die Schichtdicke einstellbar. Ein solches Verfahren ist insbesondere zur Herstellung von dreidimensionalen Körpern verwendbar, indem mehrere dünne, individuell gestaltete Schichten aufeinanderfolgend erzeugt werden.

Typischerweise wird das zu verfestigende Aufbaumaterial auf eine Temperatur vorgewärmt, die unterhalb der Verarbeitungstemperatur liegt. Mit Hilfe eines zusätzlichen Energieeintrags wird anschließend die Verarbeitungstemperatur erreicht.

Beispielsweise wird ein Kunststoffmaterial bei einem Lasersinterprozeß auf eine Temperatur unterhalb der Sintertemperatur vorgewärmt. Die durch den Laser eingebrachte Energie trägt dann lediglich die Differenzwärmemenge zum Aufschmelzen der Pulverteilchen bei.

Das Vorwärmen erfolgt in vielen Fällen über ein Erwärmen der Aufbauplattform. Mit ansteigender Bauteilhöhe nimmt bei einem solchen Vorwärmen "von unten" jedoch der Wärmestrom der Vorwärmung durch Verluste und zunehmendes Volumen der Pulverschüttung ab.

Auch andere Verfahren führen zu einer unerwünschten unregelmäßigen Temperaturverteilung in dem Aufbaumaterial. Dies trifft insbesondere auch auf solche Verfahren zu, bei denen das Vorwärmen über eine Wärmezufuhr "von oben" erfolgt. Dabei werden zeitweise beheizbare Einrichtungen über der Aufbauschicht plaziert. Durch komplizierte Steuerungen der Heizkurve und andere aufwendige Maßnahmen wird versucht, eine gleichmäßige Temperaturverteilung in dem vorzuwärmenden Aufbaumaterial zu erreichen.

Eine Aufgabe der vorliegenden Erfindung ist es, den Herstellungsprozeß zu verbessern, insbesondere den Wärmeeintrag zu optimieren.

Diese Aufgabe wird durch eine Vorrichtung nach Anspruch 1 bzw. durch ein Verfahren nach Anspruch 10 gelöst. Vorteilhafte Ausführungen der Erfindung sind in den Unteransprüchen angegeben. Die im Folgenden im Zusammenhang mit der Vorrichtung erläuterten Vorteile und Ausgestaltungen gelten sinngemäß auch für das erfindungsgemäße Verfahren und umgekehrt.

Die Erfindung schlägt vor, die aus dem Stand der Technik bekannte Vorgehensweise einer getakteten Herstellung, bei der innerhalb eines Taktes nach einem Materialauftrag zunächst ein Vorwärmen und anschließend ein selektives Verfestigen erfolgt, bevor in einem sich anschließenden neuen Takt erneut ein Materialauftrag vorgenommen wird, nicht mehr weiterzuverfolgen. Statt dessen schlägt die Erfindung einen kontinuierlichen Herstellungsprozeß vor, bei dem das Aufbringen des Aufbaumaterials, das Vorwärmen und das selektive Verfestigen durch lokales Erhitzen des Aufbaumaterials gleichzeitig erfolgt, und zwar an unterschiedlichen Stellen ein und desselben herzustellenden Objektes bzw. auch an mehreren Objekten gleichzeitig, sofern mehrere Objekte auf der Aufbauplattform hergestellt werden.

Die erfindungsgemäße Vorrichtung umfaßt eine in einer x-y-Ebene angeordnete Aufbauplattform, auf der wenigstens ein dreidimensionales Objekt schichtweise erzeugt wird, wenigstens eine Vorwärmstrahlungsquelle zum Eintragen von Wärmeenergie in das Aufbaumaterial, wenigstens eine Verfestigungsstrahlungsquelle zum selektiven Verfestigen von Aufbaumaterial durch lokales Erhitzen sowie ein die Aufbauplattform zumindest teilweise überdeckendes Isolierelement . Das Isolierelement weist wenigstens zwei gleichzeitig verwendbare Funktionsöffnungen auf, wobei eine der wenigstens zwei Funktionsöffnungen als Materialdurchlaß und eine andere der wenigstens zwei Funktionsöffnungen als Strahlungsdurchlaß ausgebildet ist. Erfindungsgemäß umfaßt die Vorrichtung eine Anzahl Antriebseinrichtungen zum Erzeugen von unabhängigen voneinander steuerbaren Relativbewegungen in x-und/oder y-Richtung zwischen wenigstens zwei der drei folgenden Komponenten der Vorrichtung: der Aufbauplattform, dem Isolierelement, der wenigstens einen Verfestigungsstrahlungsquelle.

Entsprechend umfaßt das erfindungsgemäße Verfahren die Schritte: schichtweises Erzeugen des wenigstens einen dreidimensionalen Objektes auf einer in einer x-y-Ebene angeordneten Aufbauplattform, Eintragen von Wärmeenergie in das Aufbaumaterial mit Hilfe der wenigstens einen Vorwärmstrahlungsquelle, lokales Erhitzen von Aufbaumaterial durch die wenigstens eine Verfestigungsstrahlungsquelle zum Zweck des selektiven Verfestigens sowie gleichzeitiges Durchlassen von Aufbaumaterial und Strahlungsenergie durch ein die Aufbauplattform zumindest teilweise überdeckendes Isolierelement, unter Verwendung von wenigstens zwei Funktionsöffnungen. Erfindungsgemäß umfaßt das Verfahren mittels einer Anzahl Antriebseinrichtungen das Erzeugen unabhängig voneinander ansteuerbarer Relativbewegungen in x-und/oder y-Richtung zwischen wenigstens zwei der drei folgenden Komponenten der Vorrichtung: der Aufbauplattform, dem Isolierelement, der wenigstens einen Verfestigungsstrahlungsquelle.

Anders als bei früheren Lösungen ist bei der vorliegenden Erfindung zum Vorwärmen des Aufbaumaterials bzw. zum Nachheizen ein die Aufbauplattform größtenteils überdeckendes Heizelement, beispielsweise in Gestalt einer massiven, mit Heizmodulen versehenen Heizplatte, nicht mehr notwendig. Zum Vorwärmen des Aufbaumaterials bzw. zum Nachheizen dient statt dessen die wenigstens eine Vorwärmstrahlungsquelle, beispielsweise in Form eines Infrarot-Strahlers oder eines anderen geeigneten Wärmestrahlers. Die Vorwärmstrahlungsquelle muß die Aufbauplattform nicht mehr zu einem Großteil überdecken. Es ist ausreichend, wenn die wenigstens eine Vorwärmstrahlungsquelle oberhalb eines die Aufbauplattform zumindest teilweise überdeckenden Isolierelements angebracht ist, das erfindungsgemäß das Einbringen der Strahlung zum Vorwärmen bzw. Nachheizen unterstützt. Das Isolierelement ist wärmeisolierend und besteht daher vollständig oder zumindest teilweise aus einem wärmeisolierenden Material. Oder aber das Isolierelement stellt die gewünschte Isoliereigenschaft durch andere Maßnahmen sicher, beispielsweise durch eine geeignete Oberflächenbeschichtung. Das Isolierelement ist dabei derart ausgeführt, daß es in seiner Betriebsposition oberhalb des aufzubauenden Objektes einen Raum zwischen dem Objekt und sich selbst wärmeisolierend nach oben begrenzt. Die Hauptfunktion des Isolierelements ist mit anderen Worten die Bildung einer wärmeisolierenden Begrenzung des Zwischenraumes zu dem Aufbauobjekt. Darüber hinaus unterstützt es die Wärmezufuhr zu dem Objekt. Dies erfolgt jedoch immer nur in Verbindung mit Energie, die bereits von einer Wärmequelle (Strahlungsquelle) abgegeben wurde. Diese Wärmequelle ist typischerweise über dem Isolierelement angeordnet. Die von dort abgegebene Wärmestrahlung wird von dem Isolierelement lediglich zu dem Objekt durchgelassen und/oder reflektiert. Das Isolierelement ist rein passiv, strahlt also nicht selbst.

Es ist für die Funktionsweise des Isolierelements von Vorteil, wenn das Isolierelement von den verwendeten Wärmequellen räumlich getrennt ist, wie dies in den bevorzugten Ausführungsformen der Erfindung der Fall ist. Das Isolierelement ist dann von den Strahlungsquellen beabstandet angeordnet und nicht Teil einer der Strahlungsquellen. Das Isolierelement ist dann mit anderen Worten ein von den Strahlungsquellen getrenntes, separates Bauteil.

Das Isolierelement weist unabhängig von seiner Isolierfunktion wenigstens zwei gleichzeitig verwendbare Funktionsöffnungen auf, wobei die eine Funktionsöffnung als Materialdurchlaß und die anderen Funktionsöffnung als Strahlungsdurchlaß dient. Die Öffnungen dienen mithin also einerseits als Beschichtungsöffnung zum Aufbringen von Aufbaumaterial auf die Aufbauplattform und andererseits als Heizöffnung zum Vorwärmen bzw. Nachheizen des Aufbaumaterials mit von der Vorwärmstrahlungsquelle abgegebener Wärmestrahlung bzw. als Belichtungsöffnung zum lokalen Erhitzen des Aufbaumaterials zum Zweck seiner Verfestigung. Wird ein solches Isolierelement in geeigneter Weise relativ zu der Aufbauplattform bewegt, kann ein gleichzeitiges Aufbringen von Aufbaumaterial, Vorwärmen und selektives Verfestigen erfolgen und damit ein nicht getaktetes, ununterbrochenes Herstellen des wenigstens einen Objektes. Der Aufbau des Objektes bzw. der Objekte erfolgt mit anderen Worten kontinuierlich, wobei die Aufbaugeschwindigkeit durch die Relativbewegung zwischen Aufbauplattform und Isolierelement bestimmt wird. Die geometrische Anordnung der sich in unterschiedlichen Herstellungsprozeßphasen befindenden Objektbereiche, insbesondere der Abstand dieser Objektbereiche zueinander, wird durch die Anordnung der Funktionsöffnungen in dem Isolierelement bestimmt, insbesondere durch den Abstand dieser Funktionsöffnungen zueinander.

Beispielsweise kann in einem ersten Objektbereich das Aufbaumaterial in Form einer frisch aufgebrachten Pulverschüttung durch das Isolierelement vorgewärmt werden, während in einem in Bewegungsrichtung hinter dem ersten Objektbereich angeordneten zweiten Objektbereich mit Hilfe von durch eine Belichtungsöffnung durchtretender Strahlungsenergie gerade eine Schicht n verfestigt wird. Zeitgleich erfolgt in einem dritten objektbereich, der in Bewegungsrichtung hinter dem zweiten Objektbereich liegt, ein Nachheizen der dort kurz zuvor verfestigten Aufbauschicht n durch die wenigstens eine Vorwärmstrahlungsquelle bzw. durch das mit der Vorwärmstrahlungsquelle zusammenwirkende Isolierelement, während in einem hinter dem dritten Objektbereich liegenden vierten Objektbereich durch eine Beschichtungsöffnung hindurchgeführtes weiteres Aufbaumaterial für eine nächste Schicht n+1 auf die bereits vorhandene Schicht n aufgebracht wird. Die Objektbereiche können dabei Bereiche eines Objektes oder aber auch Bereiche unterschiedlicher Objekte sein, wenn mehrere Objekte auf der Aufbauplattform angeordnet sind.

Die Wärmezufuhr für das Vorwärmen erfolgt "von oben", wodurch die Nachteile einer Wärmezufuhr über die Aufbauplattform nicht auftreten. Zugleich erfolgt die Wärmezufuhr vorzugsweise nicht nur zeitweise, nämlich nicht nur dann, wenn sich die wenigstens eine Vorwärmstrahlungsquelle wie im Stand der Technik für kurze Zeit oberhalb der Aufbauschicht befindet, sondern, ermöglicht durch die neuartige kontinuierliche Arbeitsweise, insbesondere aufgrund der Isolier- und/oder Reflexionseigenschaften des Isolierelements, dauerhaft. Damit wird auf einfache Art und Weise eine Optimierung des Wärmeeintrags erreicht. Zugleich wird der Herstellungsprozeß insgesamt verbessert.

Darüber hinaus kann in bevorzugten Ausführungsformen der Erfindung nicht nur die Verfestigungsstrahlungsquelle, sondern auch die Vorwärmstrahlungsquelle bewegt werden, nämlich in x-und/oder y-Richtung zur Positionierung der Vorwärmstrahlungsquelle relativ zu dem Isolierelement bzw. der Aufbauplattform und/oder senkrecht dazu in z-Richtung zur Änderung des vertikalen Abstandes mit dem Ziel einer veränderten Abstrahlcharakteristik und/oder einer veränderbaren Temperierung. Vorzugsweise ist die wenigstens eine Vorwärmstrahlungsquelle außerdem kontrolliert ansteuerbar zur Veränderung der von ihr abgegebenen Strahlungsleistung.

Durch das Erzeugen mehrerer Relativbewegungen zwischen den beteiligten Komponenten Aufbauplattform, Isolierelement sowie der wenigstens einen Verfestigungsstrahlungsquelle und ggf. der wenigstens einen Aufwärmstrahlungsquelle können die zeitlichen Einwirkungen der verschiedenen Prozeßbedingungen in den jeweiligen Verfahrensschritten auf einfache Weise und sehr flexibel aufeinander abgestimmt und optimiert werden. Dadurch ist der Herstellungsprozeß insgesamt weiter optimierbar.

Als besonders vorteilhaft hat sich eine Entkopplung der Bewegung des Strahlungsdurchlasses von der Bewegung der Verfestigungsstrahlungsquelle erwiesen. Mit anderen Worten kann sich die Verfestigungsstrahlungsquelle mit einer anderen Geschwindigkeit über die Aufbauplattform bzw. das sich darauf befindenden Aufbaumaterial bewegen als das Isolierelement.

Insbesondere dann, wenn das Einbringen von Strahlungsenergie durch die Belichtungsöffnung erfolgt, ohne daß diese Öffnung vollständig ausgeleuchtet wird, sondern wenn statt dessen eine gezielte Bestrahlung des unterhalb dieser Öffnung angeordneten Aufbaumaterials innerhalb der Grenzen dieser Öffnung erfolgt, beispielsweise derart, daß ein Laser das Aufbaumaterial entlang einer definierten Bahnkurve erhitzt, laßt sich erfindungsgemäß die Verfestigungsstrahlungsquelle unabhängig von der Bewegung des Isolierelements und damit unabhängig von der Bewegung der Belichtungsöffnung in dem von dem Strahlungsdurchlaß bereitgestellten Öffnungsbereich so bewegen, daß die Strahlungsleistung besonders effizient eingebracht werden kann.

Dies wird in einer bevorzugten Ausführungsform der Erfindung dadurch verwirklicht, daß die Vorrichtung neben einer ersten Antriebseinrichtung zum Erzeugen einer ersten Relativbewegung zwischen der Aufbauplattform und dem Isolierelement in x-und/oder y-Richtung eine zweite Antriebseinrichtung zum Erzeugen einer von der ersten Relativbewegung unabhängigen zweiten Relativbewegung zwischen der Verfestigungsstrahlungsquelle und dem Isolierelement in x- und/oder y-Richtung aufweist. Erforderlichenfalls ist eine dritte Antriebseinrichtung vorgesehen zum Erzeugen einer unabhängigen Relativbewegung der Vorwärmstrahlungsquelle.

Zur weiteren Optimierung des Prozesses, insbesondere für ein besonders effizientes Einbringen der Strahlungsleistung zum Verfestigen des Aufbaumaterials, kann zusätzlich die Form, die Anordnung und/oder die Größe der Belichtungsöffnungen, insbesondere die Schlitzbreite in der Hauptbewegungsrichtung, beispielsweise der x-Richtung, an den jeweiligen Prozeß anpaßbar sein bzw. auch während des Herstellungsprozesses variiert werden. Damit kann beispielsweise erreicht werden, daß der sich jeweils unmittelbar unterhalb einer Belichtungsöffnung befindende, nicht von der Vorwärmstrahlungsquelle bzw. dem Isolierelement erwärmte Bereich möglichst klein ist. Zur weiterführenden Optimierung kann die Geschwindigkeit einzelner Komponenten, insbesondere die Geschwindigkeit des Isolierelements und damit der Belichtungsöffnungen und/oder die Geschwindigkeit der Strahlungsquelle(n) während des Herstellungsprozesses variiert werden, insbesondere aufeinander abgestimmt werden.

Darüber hinaus ermöglicht es die vorliegende Erfindung, sich von der Notwendigkeit einer gleichmäßigen Temperaturverteilung zu lösen. Da an unterschiedlichen Stellen das Herstellungsverfahren unterschiedlich weit fortgeschritten ist, können an unterschiedlichen Stellen unterschiedliche Temperaturen von Vorteil sein. So kann beispielsweise in einem Bereich eine Vorwärmtemperatur zum Vorbereiten des Aufbaumaterials auf die bevorstehende lokale Erhitzung vorteilhaft sein; in einem benachbarten Bereich kann hingegen eine Nachheiztemperatur vorliegen, wie sie zum Erreichen bestimmter Eigenschaften der bereits verfestigten Schicht vorteilhaft ist, beispielsweise um Verzug zu verhindern.

Da das Isolierelement dauerhaft zur Verfügung steht, kann eine solche definierte ungleichmäßige Temperaturverteilung auf besonders einfache Weise verwirklicht werden. In einer vorteilhaften Ausführungsform der Erfindung weist das Isolierelement mehrere unterschiedlich temperierbare Bereiche auf. Dies wird beispielsweise mit Hilfe mehrerer, voneinander unabhängig betreibbarer Vorwärmstrailungsquellen erreicht.

Die Vorwärmstrahlungsquellen zur Bereitstellung von Wärmeenergie sind insbesondere in Form von oberhalb des Isolierelements angeordneten Wärmequellen ausgeführt. Wenigstens eine der Funktionsöffnungen ist als Heizöffnung zum Eintragen von Wärmeenergie in das Aufbaumaterial ausgebildet. Dabei kann es sich bei der Heizöffnung um eine Funktionsöffnung handeln, die bereits eine andere Funktion ausübt; beispielsweise kann ein bereits als Belichtungsöffnung dienender Strahlungsdurchlaß zugleich als Heizöffnung dienen.

Für die Übertragung der Heizenergie auf das Aufbaumaterial besonders vorteilhaft hat sich eine Ausführungsform der Erfindung erwiesen, bei der das Isolierelement auf seiner in Richtung der Aufbauplattform weisenden Seite reflektierend ausgebildet ist. Das Isolierelement dient dann als Reflektor zur diffusen Reflexion von Wärmestrahlung. Es reflektiert die von der wenigstens einen Vorwärmstrahlungsquelle in Richtung des Aufbaumaterials eingebrachte Wärmestrahlung auf das Aufbaumaterial und/oder es reflektiert die in das Aufbaumaterial eingebrachte und von dem Aufbaumaterial weg reflektierte Wärmestrahlung zurück auf das Aufbaumaterial. Hierzu besteht das Isolierelement aus einem entsprechend reflektierendem Material oder das Isolierelement ist an seiner im Betriebszustand in Richtung der Aufbauplattform weisenden Unterseite mit einer Wärmestrahlung diffus reflektierenden Schicht versehen. Diese Schicht kann mittels einer Beschichtung auf das Isolierelement aufgebracht worden sein.

Es sind in erster Linie diese Reflexionseigenschaften des Isolierelementes, die es ermöglichen, anstelle eines teuren, aktiven, das Aufbaumaterial mehr oder weniger überdeckenden Heizelements ein preiswertes, passives Isolierelement in Verbindung mit oberhalb angeordneten Vorwärmstrahlungsquellen zu verwenden. Durch die Isoliereigenschaften und die Reflexionseigenschaften des Isolierelements läßt sich die gewünschte Wärmezufuhr in das Aufbaumaterial mit vergleichsweise einfachen konstruktiven Mitteln realisieren. Insbesondere kann mit Hilfe des Isolierelements, welches das herzustellende Objekt überdeckt und unmittelbar über der Oberfläche des Objektes angeordnet ist, die gewünschte Temperatur des Aufbaumaterials gehalten werden, ohne daß es Heizmodule im Inneren des Isolierelements bedarf.

Vorzugsweise ist das Isolierelement im wesentlichen plattenförmig, eben ausgebildet. Die Plattenform des Isolierelements ermöglicht zugleich eine besonders einfache Ausführung der Funktionsöffnungen. In einer bevorzugten Ausführungsform der Erfindung ist das Isolierelement als sehr dünne, ebene Platte ausgeführt.

In einer besonders bevorzugten Ausführungsform der Erfindung ist das Isolierelement als Folie ausgeführt. Dadurch läßt sich die Baugröße der Vorrichtung deutlich verringern. Aufgrund des gegenüber einer massiven Isolierplatte verringerten Gewichts einer Folie kann eine entsprechende Antriebseinrichtung des Isolierelements kleiner dimensioniert sein. Eine Änderung der Größe und/oder Anordnung der Funktionsöffnungen in dem Isolierelement ist besonders einfach möglich, da es sich vorzugsweise um eine flexible Folie handelt, die aufgerollt werden kann. Zugleich ist die Ausführung mit Folie platzsparend. Der benötigte Lagerraum für Isolierelemente ist vergleichsweise gering, da die Isolierelemente aufgerollt gelagert werden können. Ist das Isolierelement als Folie ausgeführt, kann die Folie mehrschichtig aufgebaut sein, mit einer unteren reflektierenden Schicht.

Vorteilhafterweise sind Isolierelement und Aufbauplattform dabei derart ausgeführt, daß sie sich möglichst großflächig, vorzugsweise vollständig, überdecken bzw. während der Herstellungsprozesses möglichst großflächig, vorzugsweise vollständig, in Überdeckung miteinander gebracht werden können.

In einer bevorzugten Ausführungsform der Erfindung ist das Isolierelement oberhalb der Aufbauplattform angeordnet. Das Isolierelement ist dabei von der jeweils obersten Aufbauschicht beabstandet. Das Aufwärmen erfolgt durch Wärmestrahlung.

Befindet sich die Aufbauplattform innerhalb einer im Betriebszustand geschlossenen Prozeßkammer, dann kann das Isolierelement als Begrenzungswand der Prozeßkammer dienen. Mit anderen Worten wird in diesem Fall die Prozeßkammer durch das Isolierelement abgeschlossen. Das Isolierelement ist dann ein Teil der Prozeßkammer.

Bei der Beschichtungsöffnung handelt es sich stets um eine tatsächliche Öffnung im Sinne eines Materialdurchbruchs. Für die Belichtungsöffnung und die Heizöffnung muß das Isolierelement hingegen nicht zwangsläufig durchbrochen sein. Die Belichtungs- bzw. Heizöffnung kann auch als ein Bereich geeigneten Materials in dem Grundkörper des Isolierelements ausgeführt sein, das sich für einen Strahlungsdurchgang eignet.

In einer bevorzugten Ausführungsform der Erfindung erfolgt das Einbringen von Strahlungsenergie zum Verfestigen des Aufbaumaterials durch die Belichtungsöffnung, ohne daß diese Öffnung vollständig ausgeleuchtet wird. Statt dessen erfolgt eine gezielte Bestrahlung des unterhalb dieser Öffnung angeordneten Aufbaumaterials innerhalb der Grenzen dieser Öffnung. Die Strahlung kann dabei von einer oder mehreren Verfestigungsstrahlungsquellen stammen. Beispielsweise können zum lokalen Erhitzen des Aufbaumaterials ein oder mehrere Laserstrahlen innerhalb des durch die Funktionsöffnung bereitgestellten Fensters eine lineare Hin- und Herbewegung innerhalb der Funktionsöffnung vollführen oder aber der oder die Laserstrahlen werden innerhalb des Fensters auf einer nichtlinearen Bahnkurve definiert geführt, jeweils in Abhängigkeit von der zu erzeugenden Struktur. Die Führung der Strahlung erfolgt mit Hilfe einer geeigneten Steuerung. Das zuvor auf eine Temperatur unterhalb der Verarbeitungstemperatur vorgewärmte Aufbaumaterial wird lokal weiter erhitzt. Mit Hilfe dieses zusätzlichen Energieeintrags wird die Verarbeitungstemperatur erreicht.

In einer besonders vorteilhaften Ausführungsform der Erfindung werden zum Energieeintrag mindestens zwei Verfestigungsstrahlungsquellen verwendet, deren Strahlung gleichzeitig durch eine gemeinsame Belichtungsöffnung auf einen von dieser Belichtungsöffnung freigegebenen Bereich der darunterliegenden Aufbauschicht tritt. Durch die gleichzeitige Verwendung mehrerer Verfestigungsstrahlungsquellen kann das Einbringen der Strahlungsenergie besonders effizient erfolgen. Zugleich ermöglicht dies, wie nachfolgend beschrieben, eine weitergehende Optimierung der Energiezufuhr.

In einer besonders vorteilhaften Ausführungsform der Erfindung ist es vorgesehen, daß jeder Verfestigungsstrahlungsquelle ein von ihr zu bestrahlendes Bereich der Aufbauschicht, nachfolgend als Zielbereich bezeichnet, zugeordnet ist. Dabei überlappen sich benachbarte Zielbereiche zumindest teilweise, wobei sie einen Uberlappbereich bilden.

Mit anderen Worten werden die mindestens zwei gleichzeitig betriebenen Verfestigunlgsstrahlungsquellen derart angesteuert, insbesondere derart in x- und/oder y-Richtung bewegt, daß sie Strahlungsenergie (auch) in wenigstens eine gemeinsame, d.h. von den mindestens zwei Verfestigungsstrahlungsquellen bestrahlte Fläche der Aufbauschicht, den Überlappbereich, einbringen. Dabei bestrahlen die wenigstens zwei Verfestigungsstrahlungsquellen den Überlappbereich entweder gleichzeitig oder nacheinander.

Die Ansteuerung der mindestens zwei Verfestigungsstrahlungsquellen erfolgt dabei vorzugsweise derart, daß sich aus der Art und Weise der Überlappung der Strahlungsbereiche eine minimale Gesamtbearbeitungsdauer des Aufbaumaterials ergibt, genauer gesagt, daß diejenige Zeitdauer minimal ist, die für das Einbringen der für ein Verfestigen des Aufbaumaterials benötigten Energie erforderlich ist. Dadurch wird die Gesamtdauer der Herstellung der dreidimensionalen Objekte verkürzt. Vorzugsweise erfolgt die Ansteuerung zugleich derart, daß die Betriebszeiten der einzelnen Strahlungsquellen minimiert werden.

Zur Minimierung der Bearbeitungsdauer werden in einer bevorzugten Ausführungsform der Erfindung die zu belichtenden Flächen, die Zielbereiche, zunächst in einzelne Teilbereiche, nachfolgend als Flächensegmente bezeichnet, unterteilt oder es werden derartige Flächensegmente aus dem jeweiligen Zielbereich ausgewählt und auf diese Weise von Teilbereichen unterschieden, die nicht belichtet werden müssen. Beispielsweise wird der durch Form und Größe der Belichtungsöffnung vorgegebene, von mehreren Verfestigungsstrahlungsquellen gleichzeitig bestrahlbare Bereich in x- und y-Richtung segmentiert.

Anschließend wird die benötigte Verweildauer der einzelnen Verfestigungsstrahlungsquellen in dem jeweiligen Flächensegment berechnet. Abschließend wird eine geeignete, vorzugsweise die schnellste Belichtungsstrategie ermittelt. Dabei werden diejenigen Wege ermittelt, welche die einzelnen Strahlungsquellen innerhalb des von dem Strahlungsdurchlaß bereitgestellten Fensters zurücklegen. Der Energieeintrag erfolgt beispielsweise dadurch, daß ein Laserstrahl linienförmig, beispielsweise unter Bildung von eng benachbarten geradlinigen Schraffurlinien, eine zeilenweise Abtastung bzw. Rasterung des betreffenden Flächenbereiches vornimmt, um einen Bereich der Aufbauschicht zu verfestigen. Dieses Belichtungsmuster kann von Schicht zu Schicht variieren.

Vorzugsweise erfolgt nicht nur das Ermitteln der Belichtungsstrategie für eine bestimmte Segmentierung unter dem Gesichtspunkt einer zeitlichen Optimierung des Herstellungsprozesses, sondern auch das Segmentieren selbst wird so durchgeführt, daß die spätere Belichtung besonders effizient erfolgen kann. Beispielsweise erfolgt das Segmentieren unter Berücksichtigung der Lage der Bewegungsachsen der Strahlungsquellen.

Vorzugsweise erfolgt auch ein Ermitteln und Durchführen einer geeigneten Vorwärmstrategie in Bezug auf die einzelnen Flächensegmente, wobei sich "Vorwärmen" bzw. "Vorwärmstrategie" auch auf ein etwaiges Nachheizen, also das Einbringen von Wärmeenergie auf bereits verfestigtes Aufbaumaterial, beziehen soll.

Die erfindungsgemäße Vorrichtung zum Herstellen dreidimensionaler Objekte umfaßt geeignete Mittel zum Segmentieren, zum Berechnen der Verweildauer und zum Ermitteln der Belichtungs- und/oder Vorwärmstrategie oder ist mit solchen Mitteln verbunden bzw. erhält entsprechende Informationen, insbesondere Steuerungsdaten zur Ansteuerung der Anzahl der Strahlungsquellen zur Verwirklichung der ermittelten Belichtungs- und/oder Vorwärmstrategie aus einer externen Datenquelle.

Die zur Steuerung der erfindungsgemäßen Vorrichtung verwendeten Steuerungsdaten umfassen ein Datenmodell zur Beschreibung der herzustellenden Objekte bzw. werden unter Verwendung eines solchen Datenmodells erzeugt. Das Datenmodell beschreibt dabei nicht nur die Aufteilung jedes Objektes in Aufbauschichten, sondern auch die Lage der Objekte auf der Aufbauplattform.

Mit Hilfe der vorliegenden Erfindung ist es möglich, das der Herstellung der dreidimensionalen Objekte zugrundeliegende Datenmodell so zu optimieren, daß die Anordnung der Objekte auf der Aufbauplattform bzw. die Lage der Objekte zueinander so gewählt ist, daß unter Berücksichtigung der Belichtungs- bzw. Vorwärmstrategie eine besonders effiziente Herstellung, insbesondere eine besonders schnelle Herstellung erfolgt. In einer besonders vorteilhaften Ausführungsform der Erfindung erfolgt also nicht nur eine optimale Wahl der jeweiligen individuellen Belichtungs- bzw. Vorwärmstrategie pro Aufbauschicht, insbesondere eine zeitliche Optimierung des Strahlungseintrags, sondern auch bereits zuvor eine das erfindungsgemäße Verfahren berücksichtigende Optimierung der Anordnung der herzustellenden Objekte auf der Aufbauplattform.

In einer einfachen Variante der Erfindung sind Anordnung und Größe der Funktionsöffnungen unveränderlich. So hat es sich als vorteilhaft erwiesen, streifenförmige Funktionsöffnungen zu verwenden, die parallel zueinander liegen. Die Funktionsöffnungen sind dabei vorteilhafterweise senkrecht zu der Richtung der Relativbewegung, beispielsweise senkrecht zu der x- oder der y-Richtung, in dem Isolierelement angeordnet. Alternativ ist es möglich, daß die Funktionsöffnungen schräg, d.h. unter einem Winkel zu der Bewegungsrichtung, angeordnet sind. Bei der vorliegenden Erfindung von Vorteil ist es, daß die Form, Anordnung und Größe der Funktionsöffnungen an die Besonderheiten des Verfahrens angepaßt werden können. So können anstelle von streifen- oder schlitzförmigen Funktionsöffnungen für alle oder einzelne Funktionen beispielsweise auch lochförmige Funktionsöffnungen oder Funktionsöffnungen beliebiger anderer Form vorgesehen sein.

In einer vorteilhaften Ausführungsform der Erfindung sind Form, Anordnung und/oder Größe der Funktionsöffnungen veränderbar. Beispielsweise kann es von Vorteil sein, die Größe der Belichtungsöffnung veränderbar auszuführen, insbesondere dann, wenn diese Funktionsöffnung als Blende dient, d. h. zur Begrenzung des Querschnitts der eingebrachten Strahlung. Ebenfalls kann es von Vorteil sein, die Größe der Beschichtungsöffnung veränderbar auszuführen, insbesondere dann, wenn Form und/oder Größe dieser Öffnung unmittelbar den Auftragsort bzw. das Volumen des je Zeiteinheit aufgebrachten Aufbaumaterials bestimmen. Eine Veränderung der Funktionsöffnungen kann insbesondere auch während der Laufzeit, also im laufenden Herstellungsprozeß erfolgen. Hierfür sind dann gegebenenfalls zusätzliche geeignete Antriebs- und Steuerungseinrichtungen vorgesehen.

In Ausführungsvarianten der Erfindung kann die Art und Anordnung, insbesondere die Reihenfolge, der Funktionsöffnungen verändert und an unterschiedliche Arbeitsverfahren und Betriebsmodi angepaßt sein. So kann in einer bevorzugten Ausführungsform der Erfindung ein Materialdurchlaß beispielsweise von zwei Strahlungsdurchlässen flankiert sein. Damit ist ein bidirektionales Beschichten und Belichten möglich. Die Strahlungszufuhr zum Verfestigen des Aufbaumaterials kann unabhängig von der Richtung der Relativbewegung zwischen Aufbauplattform und Isolierelement erfolgen, insbesondere sowohl bei der Hin- als auch bei der Rückbewegung. Von Vorteil ist die dadurch erreichbare erhöhte Aufbaugeschwindigkeit.

In einer weiteren bevorzugten Ausführungsform der Erfindung ist es vorgesehen, daß das Isolierelement nicht feststehend ist, sondern sich relativ zu der Aufbauplattform bewegt und daß sich die wenigstens eine Verfestigungsstrahlungsquelle mit dem Isolierelement, genauer gesagt mit der ihr zugeordneten Belichtungsöffnung, mitbewegt. Dabei kann es vorgesehen sein, daß die Relativposition von Verfestigungsstrahlungsquelle und Isolierelement zueinander unverändert bleibt. Es kann aber im Rahmen einer geeigneten Ansteuerung und einer entsprechend ausgebildeten Antriebseinrichtung auch vorgesehen sein, daß die Relativposition zwischen einer Verfestigungsstrahlungsquelle und dem Isolierelement kontrolliert verändert wird, insbesondere in Verbindung mit einer zuvor ermittelten Belichtungsstrategie, wobei das Isolierelement entweder feststehend ist oder aber sich ebenfalls bewegt. Ebenfalls kann die Anzahl der Verfestigungsstrahlungsquellen an die gewünschte Belichtungsstrategie angepaßt werden. So werden in einer bevorzugten Ausführungsform einer einzigen Belichtungsöffnung mehrere sich mit der Belichtungsöffnung mitbewegende Verfestigungsstrahlungsquellen zugeordnet.

Mit der vorliegenden Erfindung wird nicht nur der Wärmeeintrag in das Aufbaumaterial verbessert. Durch ein geeignetes Zusammenspiel der Anordnung und Größe der Funktionsöffnungen und der Relativbewegung zwischen Isolierelement und Aufbauplattform sowie der Bereitstellung und/oder Führung der Vorwärmstrahlung und/oder der Strahlung zum lokalen Verfestigen des Aufbaumaterials kann der Herstellungsprozeß darüber hinaus auch besonders effizient durchgeführt werden.

Hierzu dient eine zentrale Steuerung des Herstellungsprozesses unter Verwendung eines Datenmodells zur Beschreibung des mit Hilfe des Schichtaufbauverfahrens herzustellenden Objektes. Die Steuerung umfaßt dabei alle relevanten Vorgänge des gleichzeitig an mehreren Stellen in unterschiedlichen Herstellungsphasen ablaufenden, d. h. unterschiedlich weit fortgeschrittenen Herstellungsprozesses. Mit anderen Worten erfolgt die Steuerung stets entsprechend dem tatsächlichen Fortgang des Herstellungsprozesses, wobei hierzu Sensordaten geeigneter Sensoren, insbesondere Temperatursensoren, verwendet werden. Die Steuerung umfaßt insbesondere die Steuerung der Vorwärmstrahlungsquellen zur Temperierung des Aufbaumaterials, hier gegebenenfalls die definierte Steuerung einzelner Temperaturbereiche im Zusammenspiel mit dem Isolierelement. Die Steuerung umfaßt auch die Steuerung der Antriebseinrichtungen für die Relativbewegungen zwischen dem Isolierelement, der Aufbauplattform und/oder der Strahlungsquelle(n), d.h. auch die Steuerung der geführten Strahlungsquelle(n) zum Aufwärmen bzw. zum lokalen Erhitzen des Aufbaumaterials, und die Steuerung der Bereitstellungs- und/oder Aufbringeinrichtung zum Bereitstellen und/oder Aufbringen des Aufbaumaterials, wie auch gegebenenfalls die Steuerung der in Anordnung und/oder Größe veränderbaren Funktionsöffnungen.

Alle im Zusammenhang mit der Steuerung der Schichtbauanlage bzw. der Durchführung des erfindungsgemäßen Verfahrens erforderlichen Rechenoperationen werden dabei durch eine oder mehrere Datenverarbeitungseinheiten ausgeführt, die zur Durchführung dieser Operationen ausgebildet sind. Jede dieser Datenverarbeitungseinheiten weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß den beschriebenen Verfahren. Bei den Funktionsmodulen kann es sich um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Ein Ausführungsbeispiel der Erfindung wird nachfolgend anhand der Zeichnungen näher erläutert. Hierbei zeigen:
- Fig. 1: eine schematische Darstellung einer erfindungsgemäßen Vorrichtung mit einer im Schnitt dargestellten, stark vereinfachten Prozeßkammer,
- Fig. 2: eine schematische Darstellung eines über einer Aufbauplattform angeordneten Isolierelements in Draufsicht,
- Fig. 3: vereinfachte Schnittdarstellungen von Schichten des aufzubauenden Objektes in unterschiedlichen Herstellungsphasen,
- Fig. 4: eine Ausführungsform der Erfindung mit zwei Strahlungsquellen,
- Fig. 5: eine vereinfachte schematische Schnittdarstellung der erfindungsgemäßen Vorrichtung mit alternativen Funktionsöffnungen.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

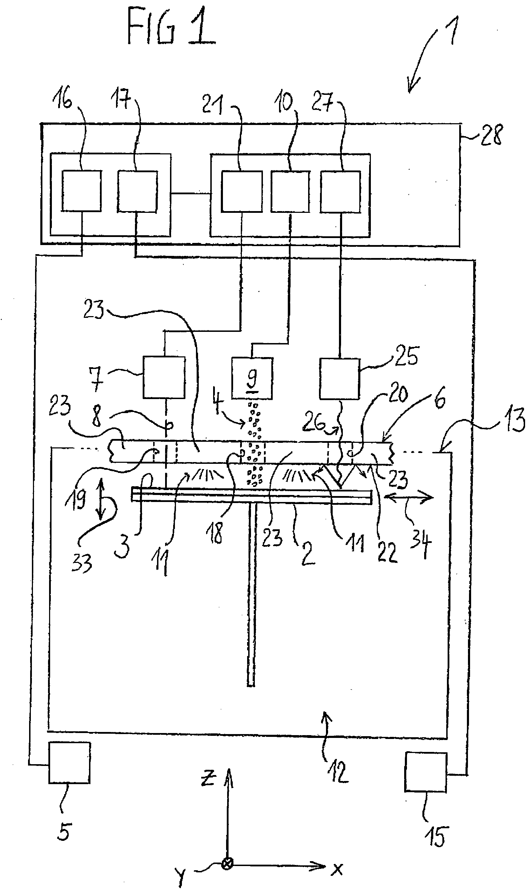

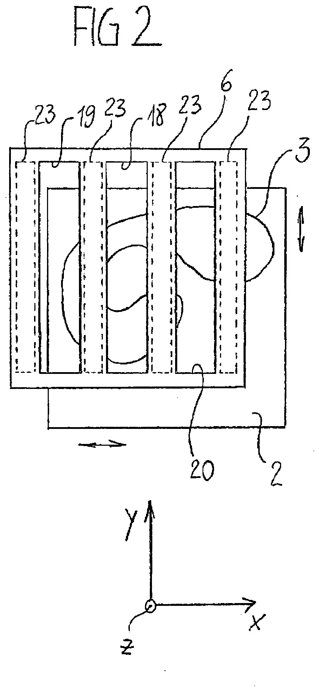

Anhand der Fig. 1 und 2 wird als Vorrichtung zum Herstellen wenigstens eines dreidimensionalen Objektes durch selektives Verfestigen eines schichtweise aufgebrachten Aufbaumaterials beispielhaft eine Vorrichtung 1 zum Lasersintern beschrieben. Die Erfindung ist jedoch nicht auf dieses spezielle Verfahren beschränkt. Die Erfindung ist auch auf andere additive Fertigungsverfahren anwendbar, wie beispielsweise Laserschmelzen, Maskensintern, Drop on Powder / Drop-on-Bed, Stereolithographie und dergleichen.

Bei der Beschreibung der Erfindung kommt ein orthogonales Koordinatensystem (x, y, z) zur Anwendung.

Die Vorrichtung 1 zum Lasersintern umfaßt eine in einer x-y-Ebene angeordnete Aufbauplattform 2, auf der ein dreidimensionales Objekt 3 in bekannter Art und Weise schichtweise erzeugt wird. Bei dem Aufbaumaterial 4 handelt es sich um ein geeignetes Kunststoffpulver. Nach der Herstellung einer Schicht n wird zur Herstellung einer neuen Schicht n+1 die Aufbauplattform 2 mit den bereits erstellten und erhärteten Schichten um eine bestimmte Weglänge nach unten verfahren. Hierzu dient eine Antriebseinrichtung 5 zum Erzeugen einer Relativbewegung zwischen der Aufbauplattform 3 und einem später genauer beschriebenen Isolierelement 6 in z-Richtung, d. h. senkrecht zu der Aufbauebene. Diese Bewegung in z-Richtung ist in Fig. 1 mit dem Pfeil 33 angedeutet. Bei der Antriebseinrichtung 5 handelt es sich beispielsweise um einen Elektromotor.

Zwischen dem Verfestigen einer Schicht n und dem Aufbringen von neuem Aufbaumaterial 4 für eine nachfolgende Schicht n+1 kann es vorgesehen sein, überschüssiges Aufbaumaterial 4 von der Aufbauplattform 2 zu entfernen. In diesem Fall ist eine hierfür geeignete Einrichtung (nicht abgebildet) vorgesehen, beispielsweise in Form eines Abstreifmessers oder dergleichen, welches vorteilhafterweise mit dem Isolierelement 6 verbunden ist oder mit diesem zusammenwirkt.

Die Vorrichtung 1 umfaßt wenigstens eine Verfestigungsstrahlungsquelle 7, die Strahlungsenergie zum lokalen Erhitzen von Aufbaumaterial 4 bereitstellt, um dieses selektiv zu verfestigen. Bei der wenigstens einen Strahlungsquelle 7 handelt es sich beispielsweise um einen Laser, der einen Laserstrahl 8 geführt abgibt.

Die Vorrichtung 1 umfaßt außerdem wenigstens eine Bereitstellungs- und/oder Aufbringeinrichtung 9, mit der Aufbaumaterial 4 bereitstellt und/oder auf die Aufbauplattform 2 oder eine bereits vorhandene Aufbauschicht aufgebracht wird. Bei der Bereitstellungs- und/oder Aufbringeinrichtung 9 handelt es sich beispielsweise um eine Einrichtung zum Aufbringen einer Pulverschüttung. Die Bereitstellungs- und/oder Aufbringeinrichtung 9 ist mit einer entsprechenden Steuerung 10 verbunden, die den Materialauftrag steuert.

Die Vorrichtung 1 umfaßt weiter das oben bereits erwähnte, die Aufbauplattform 2 während der Herstellungsprozesses dauerhaft, zumindest teilweise überdeckende Isolierelement 6. Das Isolierelement 6 ist eine vollständig aus einem wärmeisolierenden Material bestehende, sich im wesentlichen in der x-y-Ebene erstreckende flexible Folie. Es ist oberhalb der Aufbauplattform 2 angeordnet, wobei es von der jeweils obersten Aufbauschicht beabstandet ist. Der Abstand beträgt typischerweise zwischen 100 µm und 10 mm. Die in Richtung der Aufbauplattform 2 weisende Unterseite 22 des Isolierelements 6 ist derart ausgeführt, daß sie Wärmestrahlung diffus in Richtung des Aufbaumaterials bzw. des aufzubauenden Objektes reflektiert.

Die Vorrichtung 1 umfaßt eine zum Vorwärmen des Aufbaumaterials dienende, oberhalb des Isolierelements 6 angeordnete Vorwärmstrahlungsquelle 25 zur Bereitstellung von Wärmeenergie. Bei dieser Strahlungsquelle 25 handelt es sich beispielsweise um einen Infrarotstrahler, der Infrarotstrahlung 26 abgibt. Für diese Strahlungsquelle 25 ist eine geeignete Steuerung 27 vorgesehen.

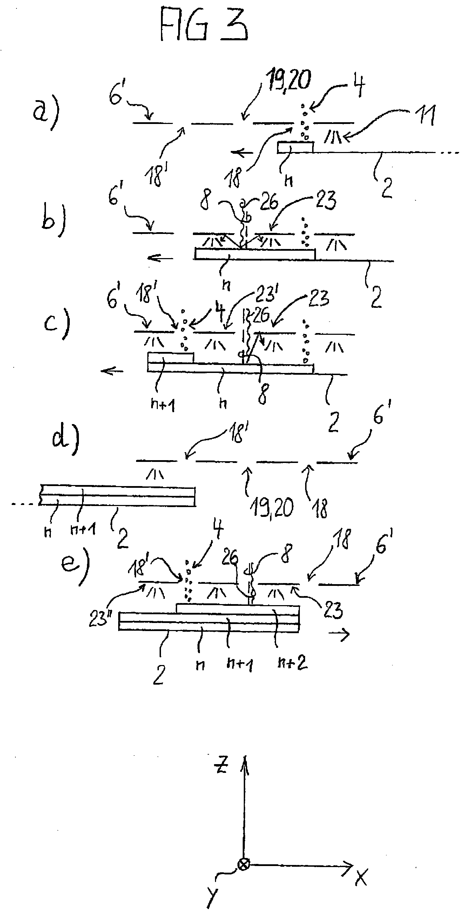

Der Strahlungsquelle 25 ist wenigstens eine eigene Funktionsöffnung 20 zugewiesen, die somit als Heizöffnung dient. Der Strahlungsquelle 25 können aber auch eine oder mehrere der weiter unten genauer beschriebenen anderen Funktionsöffnungen zugeordnet sein, beispielsweise die Belichtungsöffnung, die damit zugleich als Heizöffnung dient. Das Aufwärmen des Aufbaumaterials 4 erfolgt durch von der Strahlungsquelle 25 durch die Heizöffnungen 20 in dem Isolierelement 6 abgegebene Infrarotstrahlung 26 sowie durch die von der Unterseite 22 des Isolierelements 6 reflektierte Wärmestrahlung 11, wie sie in den Fig. 1 und 3 symbolisch dargestellt ist.

Die Aufbauplattform 2 befindet sich innerhalb einer im Betriebszustand geschlossenen Prozeßkammer 12, die in Fig. 1 nur schematisch angedeutet ist. Das Isolierelement 6 dient dabei als Begrenzungswand der Prozeßkammer 12. Genauer gesagt ist das Isolierelement 6 als Teil der oberen Abdeckung 13 der Prozeßkammer 12 ausgeführt.

Die Vorrichtung 1 umfaßt zudem eine Antriebseinrichtung 15 zum Erzeugen einer Relativbewegung zwischen der Aufbauplattform 2 und dem Isolierelement 6 in x- und/oder y-Richtung, d. h. in einer Schichtrichtung. Diese Bewegung in x- und/oder y-Richtung ist in Fig. 1 mit dem Pfeil 34 angedeutet. Bei der Antriebseinrichtung 15 handelt es sich beispielsweise um einen Elektromotor. Beide Antriebseinrichtungen 5, 15 sind mit entsprechenden Antriebssteuerungen 16, 17 verbunden.

In dem hier beschriebenen Ausführungsbeispiel bewegt die Antriebseinrichtung 15 die Aufbauplattform 2 relativ zu dem feststehenden Isolierelement 6. Die Hauptbewegungsrichtung ist die x-Richtung. Im einfachsten Fall beschränkt sich die Bewegung der Aufbauplattform 2 auf diese Hauptbewegungsrichtung. Falls für den Herstellungsprozeß erforderlich oder vorteilhaft, kann die Bewegung in x-Richtung von einer Bewegung der Aufbauplattform 2 in y-Richtung überlagert werden.

Auch die Strahlungsquelle 25 kann in einem nicht dargestellten Ausführungsbeispiel mit einer Antriebseinrichtung versehen sein, insbesondere zum Bewegen der Strahlungsquelle in x-und/oder y-Richtung, vorzugsweise auch unabhängig von einer der anderen, oben beschriebenen Bewegungen von Isolierelement 6 und Aufbauplattform 2. Auch bei einer solchen weiteren Antriebseinrichtung kann es sich um einen Elektromotor handeln, der mit einer entsprechenden Antriebssteuerung verbunden ist. Im einfachsten Fall ist die Strahlungsquelle 25 jedoch ortsfest zu dem Isolierelement 6 angeordnet. In solchen Fällen, in denen das Isolierelement 6 nicht feststeht, sondern in x- und/oder y-Richtung bewegt wird, wird die Strahlungsquelle 25 dann von der entsprechenden Antriebseinrichtung mit dem Isolierelement 6 mitbewegt.

Das Isolierelement 6 weist wenigstens zwei, in dem in Fig. 1 dargestellten Beispiel drei gleichzeitig verwendbare, voneinander beabstandete Funktionsöffnungen 18, 19, 20 auf. Die Funktionsöffnungen 18, 19, 20 sind schlitz- bzw. streifenförmig, langgestreckt rechteckig, liegen parallel zueinander und senkrecht zu der Hauptbewegungsrichtung, hier der x-Richtung. Eine der Funktionsöffnungen ist als Materialdurchlaß 18 und eine andere der Funktionsöffnungen als Strahlungsdurchlaß 19 ausgebildet, während die dritte Funktionsöffnung als Heizöffnung 20 dient. Während des Erzeugens des Objektes 3 wird gleichzeitig sowohl Aufbaumaterial 4 als auch Strahlungsenergie zum Aufwärmen des Aufbaumaterials und Strahlungsenergie zum Verfestigen des Aufbaumaterials, hier in Form des Laserstrahls 8, durch die Funktionsöffnungen 18, 19, 20 hindurchgelassen.

Anders ausgedrückt ist die eine Funktionsöffnung als Beschichtungsöffnung 18 zum Aufbringen von Aufbaumaterial 4 auf die Aufbauplattform 2 oder eine bereits vorhandene Aufbauschicht ausgebildet und die andere Funktionsöffnung ist als Belichtungsöffnung 19 zum gleichzeitigen Einbringen von Strahlungsenergie der wenigstens einen Strahlungsquelle 7 in das aufgebrachte Aufbaumaterial 4 zum Verfestigen des Aufbaumaterials 4 ausgebildet.

Das Einbringen von Strahlungsenergie zum lokalen Erhitzen des Aufbaumaterials 4 erfolgt, indem der Laserstrahl 8 durch die Belichtungsöffnung 19 hindurch auf einer definierten Bahn geführt wird. Die Führung des Laserstrahls 8 erfolgt mit Hilfe einer geeigneten Antriebs- und Steuerungseinrichtung 21. Mit anderen Worten wird nicht nur die erste Antriebseinrichtung 15 zum Erzeugen einer Relativbewegung zwischen der Aufbauplattform 2 und dem Isolierelement 6 in x- und/oder y-Richtung, sondern auch eine zweite Antriebseinrichtung 21 zum Erzeugen einer von dieser ersten Relativbewegung unabhängigen zweiten Relativbewegung zwischen der Strahlungsquelle 7 und dem Isolierelement 6 in x-und/oder y-Richtung verwendet. In dem illustrierten Beispiel dient die zweite Antriebseinrichtung 21 zur Bewegung der Strahlungsquelle 7. Diese Bewegung der Strahlungsquelle 7 in x-und/oder y-Richtung ist in Fig. 1 mit dem Pfeil 35 angedeutet.

Statt eines feststehenden Isolierelements 6 mit demgegenüber beweglicher Aufbauplattform und beweglicher Strahlungsquelle 7 kann in alternativen Ausführungen (nicht abgebildet) auch die Aufbauplattform in der x-y-Ebene feststehend sein, wobei in diesem Fall Isolierelement 6 und Strahlungsquelle 7 zueinander bewegbar ausgeführt sind. Alternativ kann auch eine feststehende Strahlungsquelle 7 mit einem sich bewegenden Isolierelement 6 und einer sich bewegenden Aufbauplattform 2 kombiniert sein, um die beiden gewünschten Relativbewegungen bereitzustellen. Auch kann die Strahlungsquelle 7 mit dem Isolierelement 6 mitbewegt werden, so daß sich deren Relativposition zueinander nicht ändert. Die Vorrichtung 1 kann auch eine dritte Antriebseinrichtung (nicht dargestellt) zum Erzeugen einer Relativbewegung zwischen der Verfestigungsstrahlungsquelle 7 und dem Isolierelement 6 in x-und/oder y-Richtung aufweisen, sowie eine dazugehörige Antriebssteuerung, wobei die dritte Antriebseinrichtung vorzugsweise die Verfestigungsstrahlungsquelle 7 antreibt.

Zum Aufwärmen des Aufbaumaterials ist die Strahlungsquelle 25 vorgesehen. In einer vorteilhaften Ausführungsform der Erfindung werden jedoch mehrere, voneinander unabhängig ansteuerbare Strahlungsquellen 25 eingesetzt, die oberhalb des Isolierelements 6, insbesondere genau über den Funktionsöffnungen angeordnet sind, insbesondere über den Heizöffnungen 20. Strahlungsquellen 25 können aber auch über Belichtungsöffnungen 19 bzw. Beschichtungsöffnungen 18 angeordnet sein, wenn es vorgesehen ist, Wärmestrahlung zum Vorwärmen oder Nachheizen des Aufbaumaterials auch durch solche Öffnungen einzustrahlen. Alle Strahlungsquellen 25 sind mit einer Heizungssteuerung 27 verbunden, die vorzugsweise mit der Antriebseinrichtung der Strahlungsquelle 25 funktional gekoppelt ist, wenn eine solche Antriebseinrichtung zum Einsatz kommt.

Eine zentrale Steuerung 28 ist für den kontrollierten Ablauf des Herstellungsverfahrens verantwortlich. Die Steuerung 28 umfaßt hierfür alle relevanten Teilsteuerungen 10, 16, 17, 21, 24.

Anhand der Fig. 3 werden nachfolgend verschiedene Phasen der Herstellung beschrieben. Dabei kommt ein von dem in den Fig. 1 und 2 gezeigten Isolierelement 6 verschiedenes Isolierelement 6' zur Anwendung, welches über drei Funktionsöffnungen verfügt, nämlich über zwei Beschichtungsöffnungen 18, 18' und eine zwischen den Beschichtungsöffnungen 18, 18' angeordnete Belichtungsöffnung 19, die zugleich als Heizöffnung 20 dient.

In Fig. 3a bewegt sich die Aufbauplattform 2, angetrieben von der Antriebseinrichtung 15, in x-Richtung unter der ersten Beschichtungsöffnung 18 des Isolierelements 6 hindurch. Es wird Aufbaumaterial 4 für eine Schicht n auf die Aufbauplattform 2 aufgebracht.

In Fig. 3b bewegt sich die Aufbauplattform 2 in x-Richtung weiter. Das kurz zuvor aufgebrachte Aufbaumaterial 4 wird auf eine Temperatur unterhalb der Sintertemperatur vorgewärmt. Zu diesem Zweck wird von der Strahlungsquelle 25 Wärmestrahlung 26 in Richtung des Aufbaumaterials abgestrahlt. Die Wärmestrahlung 26 passiert das Isolierelement 6 durch die Belichtungs- und Heizöffnung 19, 20 und wird im Bereich dieser Öffnung unmittelbar in das Aufbaumaterial eingestrahlt. Zugleich wird die Wärmestrahlung 26 von der reflektierenden Unterseite 22 des Isolierelements 6 in einen Reflexionsbereich 23 zwischen der ersten Beschichtungsöffnung 18 und der Belichtungs- und Heizöffnung 19, 20 als reflektierende Wärmestrahlung 11 in das Aufbaumaterial eingestrahlt. Gleichzeitig erfolgt in einen benachbarten, kurz zuvor vorgewärmten Objektbereich ein Einbringen zusätzlicher Wärmeenergie mit Hilfe des Laserstrahls 8 durch die Belichtungsöffnung 19, wodurch die Pulverteilchen aufschmelzen.

In Fig. 3c bewegt sich die Aufbauplattform 2 in x-Richtung weiter. Bevor die Aufbauplattform 2 die zweite Beschichtungsöffnung 18' erreicht, wird sie, angetrieben von der Antriebseinrichtung 5, in z-Richtung eine erforderliche Wegstrecke nach unten bewegt. Durch die zweite Beschichtungsöffnung 18' wird Aufbaumaterial 4 für eine weitere Schicht n+1 aufgebracht. Kurz zuvor wurde der Objektbereich unterhalb des Reflexionsbereiches 23', der zwischen der Belichtungsöffnung 19 und der zweiten Beschichtungsöffnung 18' liegt, durch eingestrahlte und reflektierte Wärmestrahlung 11 erneut erwärmt.

In Fig. 3d hat die Aufbauplattfcrm 2 ihren einen Umkehrpunkt erreicht. Die Schichten n und n+1 wurden erzeugt. Da keine Belichtungs- und Heizöffnung 19, 20 mehr über der Aufbauplattform 2 angeordnet ist, findet in diesem Augenblick keine Laserbestrahlung mehr statt. Auch das Aufbringen von Aufbaumaterial 4 erfolgt nur solange, wie wenigstens eine der beiden Beschichtungsöffnungen 18, 18' über der Aufbauplattform 2 angeordnet ist.

In Fig. 3e bewegt sich die Aufbauplattform 2 in x-Richtung, entgegengesetzt zu der ersten Bewegung, unter dem Isolierelement 6 hindurch. Mit Hilfe der zweiten Beschichtungsöffnung 18' ist bereits ein neuer Materialauftrag für die nächste Schicht n+2 erfolgt, ebenso wie ein Vorwärmen des Aufbaumaterials mit Hilfe von eingestrahlter und reflektierter Wärmestrahlung 11 in einem Objektbereich unterhalb des zu der Beschichtungsöffnung 18' benachbarten Reflexionsbereiches 23". Zuvor wurde die Aufbauplattform 2, angetrieben von der Antriebseinrichtung 5, erneut eine erforderliche Wegstrecke in z-Richtung nach unten bewegt. Durch die Belichtungs- und Heizöffnung 19, 20 erfolgt eine lokale Bestrahlung mit dem Laserstrahl 8 zum Verfestigen der zu erzeugenden Struktur. In dem ersten Reflexionsbereich 23 erfolgt durch eingestrahlte und reflektierte Wärmestrahlung 11 ein Nachheizen. Bei einer weiteren Bewegung der Aufbauplattform 2 wird in Kürze durch die erste Beschichtungsöffnung 18 ein Materialauftrag für die Schicht n+3 erfolgen.

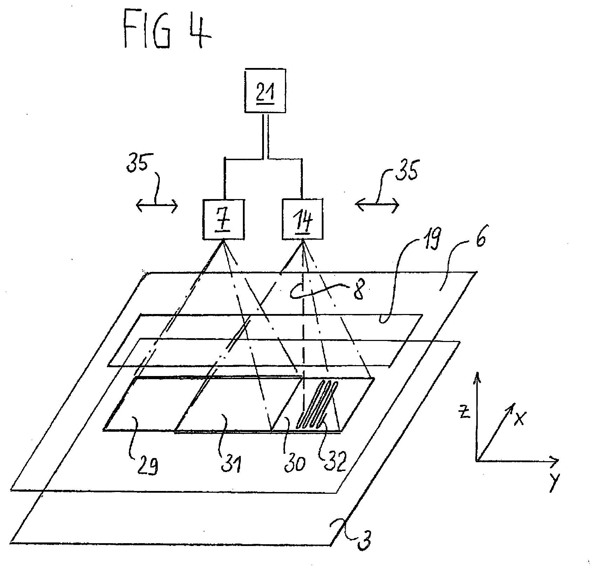

In Fig. 4 ist ein Ausführungsbeispiel illustriert, bei dem die Strahlung 8 von zwei zeitgleich betriebenen Strahlungsquellen 7, 14 durch eine gemeinsame Belichtungsöffnung 19 auf die von dieser Belichtungsöffnung 19 freigegebene Aufbauschicht 3 auftrifft. Aus Gründen der Übersichtlichkeit ist das Isolierelement 6 transparent dargestellt, zudem ist nur eine einzige Funktionsöffnung, die Belichtungsöffnung 19, abgebildet. Jeder Strahlungsquelle 7, 14 ist ein Zielbereich 29, 30 zugeordnet, wobei diese Zuordnung symbolisch mit durchbrochenen Hilfslinien dargestellt wird. Die beiden Zielbereiche 29, 30 überschneiden sich unter Ausbildung eines Überlappbereiches 31. Die Ansteuerung der mindestens zwei Strahlungsquellen 7, 14 bei denen es sich wieder um Laser handeln kann, erfolgt durch eine entsprechend ausgebildete Antriebs- und Steuereinrichtung 21 derart, daß sich eine minimale Gesamtbearbeitungsdauer des Aufbaumaterials ergibt. Zur Verwirklichung einer optimalen Belichtungsstruktur bewegt sich jede Strahlungsquelle 7, 14 auf einer definierten Bahn 32 in x- und/oder y-Richtung, wie für die Strahlungsquelle 14 in Fig. 4 angedeutet.

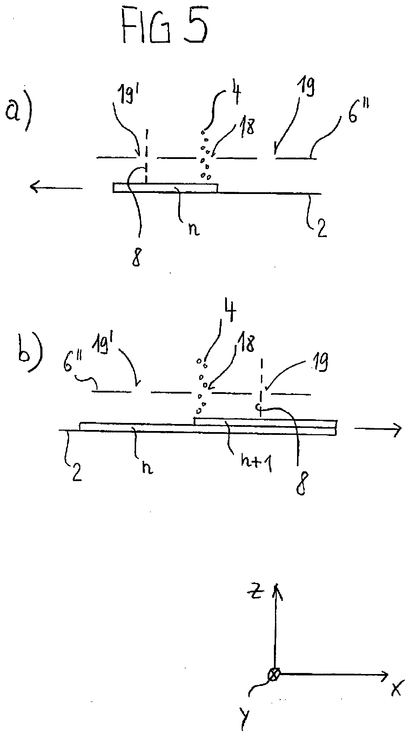

Bei der in Fig. 5 dargestellten alternativen Variante des Isolierelements 6" ist eine Beschichtungsöffnung 18 zwischen zwei Belichtungsöffnungen 19, 19' vorgesehen. Damit ist ein bidirektionales Belichten möglich, indem bei einer Bewegung der Aufbauplattform 2 in x-Richtung nach einem Materialauftrag der Schicht n durch die Beschichtungsöffnung 18 ein Belichten durch die in Bewegungsrichtung hinter der Beschichtungsöffnung 18 liegende Belichtungsöffnung 19 erfolgt (Fig. 5a), während umgekehrt bei einer Rückbewegung der Aufbauplattform 2 entgegen der x-Richtung bereits die Belichtung der nächsten Schicht n+1 durch die dann in Bewegungsrichtung hinter der Beschichtungsöffnung 18 liegende Belichtungsöffnung 19' stattfindet, nachdem zuvor Material durch die Beschichtungsöffnung 18 aufgebracht wurde (Fig. 5b).

Alle in der Beschreibung, den nachfolgenden Ansprüchen und der Zeichnung dargestellten Merkmale können sowohl einzeln, als auch in beliebiger Kombination miteinander erfindungswesentlich sein.

### Bezugszeichenliste

- 1: Vorrichtung zum Lasersintern
- 2: Aufbauplattform
- 3: Objekt, Aufbauschicht
- 4: Aufbaumaterial
- 5: Antriebseinrichtung (z)
- 6: Isolierelement
- 7: Strahlungsquelle, Laser
- 8: Laserstrahl
- 9: Bereitstellungs-/Aufbringeinrichtung
- 10: Steuerung des Materialauftrags
- 11: Wärmestrahlung
- 12: Prozeßkammer
- 13: Abdeckung
- 14: Strahlungsquelle, Laser
- 15: Antriebseinrichtung (x/y)
- 16: Antriebssteuerung (z)
- 17: Antriebssteuerung (x/y)
- 18: Funktionsöffnung, Materialdurchlaß, Beschichtungsöffnung
- 19: Funktionsöffnung, Strahlungsdurchlaß, Belichtungsöffnung
- 20: Funktionsöffnung, Heizöffnung
- 21: Antriebs- und Steuerungseinrichtung des Lasers
- 22: Unterseite des Isolierelements
- 23: Reflexionsbereich
- 24: (frei)
- 25: Strahlungsquelle, IR-Strahler
- 26: Infrarotstrahlung
- 27: Heizungssteuerung
- 28: zentrale Steuerung
- 29: erster Zielbereich
- 30: zweiter Zielbereich
- 31: Überlappbereich
- 32: Bewegungsbahn
- 33: Bewegung des Isolierelements in z-Richtung
- 34: Bewegung des Isolierelements in x- und/oder y-Richtung
- 35: Bewegung der Strahlungsquelle in x- und/oder y-Richtung

## Patentansprüche

1. Vorrichtung (1) zum Herstellen dreidimensionaler Objekte (3) durch selektives Verfestigen eines schichtweise aufgebrachten Aufbaumaterials (4),
- mit einer in einer x-y-Ebene angeordneten Aufbauplattform (2), auf der wenigstens ein dreidimensionales Objekt (3) schichtweise erzeugt wird,
- mit wenigstens einer Vorwärmstrahlungsquelle (25) zum Eintragen von Wärmeenergie (11) in das Aufbaumaterial (4),
- mit wenigstens einer Verfestigungsstrahlungsquelle (7, 14) zum selektiven Verfestigen von Aufbaumaterial (4) durch lokales Erhitzen, **dadurch gekennzeichnet, dass** die Vorrichtung
mit einem die Aufbauplattform (2) zumindest teilweise überdeckenden, passiven Isolierelement (6) versehen ist, das nicht selbst strahlt,
wobei das Isolierelement (6) wenigstens zwei gleichzeitig verwendbare Funktionsöffnungen (18, 19, 20) aufweist,
wobei eine der wenigstens zwei Funktionsöffnungen als Materialdurchlaß (18) und eine andere der wenigstens zwei Funktionsöffnungen als Strahlungsdurchlaß (19, 20) ausgebildet ist,
- mit einer Anzahl Antriebseinrichtungen (15, 21) zum Erzeugen von Relativbewegungen in x- und/oder y-Richtung zwischen wenigstens zwei der drei folgenden Komponenten: der Aufbauplattform (2), dem Isolierelement (6), der wenigstens einen Verfestigungsstrahlungsquelle (7, 14).

2. Vorrichtung (1) nach Anspruch 1, wobei das Isolierelement (6) auf seiner in Richtung der Aufbauplattform (2) weisenden Seite reflektierend ausgebildet ist.

3. Vorrichtung (1) nach Anspruch 1 oder 2, wobei das Isolierelement (6) als Folie ausgebildet ist.

4. Vorrichtung (1) nach einem der Ansprüche 1 bis 3,
- mit einer ersten Antriebseinrichtung (15) zum Erzeugen einer Relativbewegung zwischen der Aufbauplattform (2) und dem Isolierelement (6) in x- und/oder y-Richtung, und
- mit einer zweiten Antriebseinrichtung (21) zum Erzeugen einer Relativbewegung zwischen der wenigstens einen Verfestigungsstrahlungsquelle (7, 14) und dem Isolierelement (6) in x- und/oder y-Richtung.

5. Vorrichtung (1) nach einem der Ansprüche 1 bis 4, mit wenigstens zwei gleichzeitig betreibbaren Verfestigungsstrahlungsquellen (7, 14) und einer Steuerung (21) zur Ansteuerung dieser Verfestigungsstrahlungsquellen (7, 14) derart, daß sich deren Strahlungsbereiche (29, 30) überlappen.

6. Vorrichtung (1) nach einem der Ansprüche 1 bis 5, wobei die Form, Anordnung und/oder Größe der Funktionsöffnungen (18, 19, 20) veränderbar ist.

7. Vorrichtung (1) nach einem der Ansprüche 1 bis 6, wobei die Geschwindigkeit des Isolierelements (6) und/oder die Geschwindigkeit der wenigstens einen Verfestigungsstrahlungsquelle (7, 14) während des Herstellungsprozesses veränderbar ist.

8. Vorrichtung (1) nach einem der Ansprüche 1 bis 7, wobei das Isolierelement eine als Materialdurchlaß (18) ausgebildete Funktionsöffnung sowie zwei diese Funktionsöffnung in Bewegungsrichtung seitlich flankierende als Strahlungsdurchlässe (19, 19') ausgebildete Funktionsöffnungen aufweist.

9. Vorrichtung (1) nach einem der Ansprüche 1 bis 8, mit einer dritten Antriebseinrichtung zum Erzeugen einer Relativbewegung zwischen wenigstens einer Verfestigungsstrahlungsquelle (7, 14) und dem Isolierelement (6) in x- und/oder y-Richtung.

10. Verfahren zum Herstellen dreidimensionaler Objekte (3) durch selektives Verfestigen eines schichtweise aufgebrachten Aufbaumaterials (4),
- wobei auf einer in einer x-y-Ebene angeordneten Aufbauplattform (2) wenigstens ein dreidimensionales Objekt (3) schichtweise erzeugt wird,
- wobei wenigstens eine Vorwärmstrahlungsquelle (25) Wärmeenergie (11) in das Aufbaumaterial (4) einträgt,
- wobei wenigstens eine Verfestigungsstrahlungsquelle (7, 14) Aufbaumaterial (4) zum selektiven Verfestigen lokal erhitzt,
- wobei ein die Aufbauplattform (2) zumindest teilweise überdeckendes, passives Isolierelement (6), das nicht selbst strahlt, unter Verwendung von wenigstens zwei Funktionsöffnungen (18, 19, 20) gleichzeitig Aufbaumaterial (4) und Strahlungsenergie (8, 11) durchläßt,
- wobei eine Anzahl Antriebseinrichtungen (15, 21) Relativbewegungen in x- und/oder y-Richtung zwischen wenigstens zwei der drei folgenden Komponenten erzeugt: der Aufbauplattform (2), dem Isolierelement (6), der wenigstens einen Verfestigungsstrahlungsquelle (7, 14).

## Claims

1. An apparatus (1) for manufacturing three-dimensional objects (3) by selective solidification of a build material (4) applied in layers,
- having a build platform (2), arranged in an X-Y plane, on which at least one three-dimensional object (3) is generated in layers,
- having at least one preheating radiation source (25) for inputting thermal energy (11) into the build material (4),
- having at least one solidifying radiation source (7,14) for selective solidification of build material (4) by local heating,
**characterized in that** the apparatus having a passive insulating element (6) which does not itself radiates, said insulating element (6) at least partly overlying the build platform (2),
wherein the insulating element (6) comprising at least two simultaneously usable functional openings (18, 19, 20),
wherein one of the at least two functional openings being embodied as a material passthrough (18) and another of the at least two functional openings being embodied as a radiation passthrough (19, 20),
having a number of drive devices (15, 21) for generating relative motions in an X and/or Y direction between at least two of the three following components: the build platform (2), the insulating element (6), the at least one solidifying radiation source (7, 14).

2. The apparatus (1) according to Claim 1, the insulating element (6) being configured reflectively on its side facing toward the build platform (2).

3. The apparatus (1) according to Claim 1 or 2, the insulating element (6) being embodied as a foil.

4. The apparatus (1) according to one of Claims 1 to 3,
- having a first drive device (15) for generating a relative motion in an X and/or Y direction between the build platform (2) and the insulating element (6), and
- having a second drive device (21) for generating a relative motion in an X and/or Y direction between the at least one solidifying radiation source (7, 14) and the insulating element (6).

5. The apparatus (1) according to one of Claims 1 to 4, having at least two simultaneously operable solidifying radiation sources (7, 14) and a control system (21) for applying control to those solidifying radiation sources (7, 14) in such a way that their radiation regions (29, 30) overlap.

6. The apparatus (1) according to one of Claims 1 to 5, the shape, arrangement, and/or size of the functional openings (18, 19, 20) being modifiable.

7. The apparatus (1) according to one of Claims 1 to 6, the speed of the insulating element (6) and/or the speed of the at least one solidifying radiation source (7, 14) being modifiable during the manufacturing process.

8. The apparatus (1) according to one of Claims 1 to 7, the insulating element comprising one functional opening embodied as a material passthrough (18) and two functional openings, flanking that functional opening laterally in a motion direction, embodied as radiation passthroughs (19, 19').

9. The apparatus (1) according to one of Claims 1 to 8, having a third drive device for generating a relative motion in an X and/or Y direction between at least one solidifying radiation source (7, 14) and the insulating element (6).

10. A method for manufacturing three-dimensional objects (3) by selective solidification of a build material (4) applied in layers,
- wherein at least one three-dimensional object (3) is generated in layers on a build platform (2) arranged in an X-Y plane,
- wherein at least one preheating radiation source (25) is inputting thermal energy (11) into the build material (4),
- wherein at least one solidifying radiation source (7, 14) is locally heating build material (4) for selective solidification,
- wherein a passive insulating element (6) that does not radiates itself and that at least partly overlies the build platform (2) is allowing build material (4) and radiation energy (8, 11) to pass through simultaneously using at least two functional openings (18, 19, 20),
- wherein a number of drive devices (15, 21) is generating relative motions in an X and/or Y direction between at least two of the three following components: the build platform (2), the insulating element (6), the at least one solidifying radiation source (7, 14).

## Revendications

1. Dispositif (1) de fabrication d'objets tridimensionnels (3) par solidification sélective d'un matériau de construction (4) appliqué en couches,
- avec une plate-forme de construction (2) disposée dans un plan x-y sur laquelle est produit en couches au moins un objet tridimensionnel (3),
- avec au moins une source de rayonnement de préchauffage (25) pour introduire de l'énergie thermique (11) dans le matériau de construction (4),
- avec au moins une source de rayonnement de solidification (7, 14) pour la solidification sélective de matériau de construction (4) par chauffage local, **caractérisé en ce que** le dispositif est pourvu d'un élément isolant passif (6) recouvrant au moins en partie la plate-forme de construction (2), qui n'irradie pas de lui-même,
l'élément isolant (6) présentant au moins deux ouvertures fonctionnelles (18, 19, 20) pouvant être utilisées simultanément,
l'une des au moins deux ouvertures fonctionnelles étant réalisée sous forme de passage de matériau (18) et une autre des au moins deux ouvertures fonctionnelles étant réalisée sous forme de passage de rayonnement (19, 20),
- avec plusieurs dispositifs d'entraînement (15, 21) pour générer des mouvements relatifs dans la direction x et/ou y entre au moins deux des trois composants suivants : la plate-forme de construction (2), l'élément isolant (6), l'au moins une source de rayonnement de solidification (7, 14).

2. Dispositif (1) selon la revendication 1, dans lequel l'élément isolant (6) est réalisé de manière réfléchissante sur son côté tourné dans la direction de la plate-forme de construction (2).

3. Dispositif (1) selon la revendication 1 ou 2, dans lequel l'élément isolant (6) est réalisé sous forme de film.

4. Dispositif (1) selon l'une quelconque des revendications 1 à 3,
- avec un premier dispositif d'entraînement (15) pour générer un mouvement relatif entre la plate-forme de construction (2) et l'élément isolant (6) dans la direction x et/ou y, et
- avec un deuxième dispositif d'entraînement (21) pour générer un mouvement relatif entre l'au moins une source de rayonnement de solidification (7, 14) et l'élément isolant (6) dans la direction x et/ou y.

5. Dispositif (1) selon l'une quelconque des revendications 1 à 4, comprenant au moins deux sources de rayonnement de solidification (7, 14) pouvant fonctionner simultanément et une commande (21) pour commander ces sources de rayonnement de solidification (7, 14) de telle sorte que leurs zones de rayonnement (29, 30) se chevauchent.

6. Dispositif (1) selon l'une quelconque des revendications 1 à 5, dans lequel la forme, l'agencement et/ou la taille des ouvertures fonctionnelles (18, 19, 20) peuvent être modifiées.

7. Dispositif (1) selon l'une quelconque des revendications 1 à 6, dans lequel la vitesse de l'élément isolant (6) et/ou la vitesse de l'au moins une source de rayonnement de solidification (7, 14) peuvent être modifiées pendant le processus de fabrication.

8. Dispositif (1) selon l'une quelconque des revendications 1 à 7, dans lequel l'élément isolant présente une ouverture fonctionnelle réalisée sous forme de passage de matériau (18) ainsi que deux ouvertures fonctionnelles réalisées en tant que passages de rayonnement (19, 19') bordant latéralement cette ouverture fonctionnelle dans la direction de déplacement.

9. Dispositif (1) selon l'une quelconque des revendications 1 à 8, comprenant un troisième dispositif d'entraînement pour générer un mouvement relatif entre au moins une source de rayonnement de solidification (7, 14) et l'élément isolant (6) dans la direction x et/ou y.

10. Procédé de fabrication d'objets tridimensionnels (3) par solidification sélective d'un matériau de construction (4) appliqué en couches,
- au moins un objet tridimensionnel (3) étant produit en couches sur une plate-forme de construction (2) disposée dans un plan x-y,
- au moins une source de rayonnement de préchauffage (25) introduisant de l'énergie thermique (11) dans le matériau de construction (4),
- au moins une source de rayonnement de solidification (7, 14) chauffant localement un matériau de construction (4) pour la solidification sélective,
- un élément isolant passif (6), qui n'irradie pas de lui-même, recouvrant au moins en partie la plate-forme de construction (2) en utilisant au moins deux ouvertures fonctionnelles (18, 19, 20), laissant passer simultanément du matériau de construction (4) et de l'énergie de rayonnement (8, 11),
- plusieurs dispositifs d'entraînement (15, 21) générant des mouvements relatifs dans la direction x et/ou y entre au moins deux des trois composants suivants : la plate-forme de construction (2), l'élément isolant (6), l'au moins une source de rayonnement de solidification (7, 14).
